# EUROPÄISCHE PATENTSCHRIFT

(11) **EP 4 546 334 B1**
(45) Veröffentlichungstag und Bekanntmachung des Hinweises auf die Patenterteilung: **11.03.2026**
(21) Anmeldenummer: 23205867.7
(22) Anmeldetag: 25.10.2023
(51) Int. Cl.: G10L 15/06, G06F 21/62, G10L 15/30

(54) **ZENTRALER SPRACHMODELLSERVER FÜR EIN SPRACHGESTEUERTES ENDGERÄT UND BETRIEBSVERFAHREN FÜR EINEN ZENTRALEN SPRACHMODELLSERVER**
CENTRAL LANGUAGE MODEL SERVER FOR VOICE-ENABLED TERMINAL AND OPERATING METHOD FOR CENTRAL LANGUAGE MODEL SERVER
SERVEUR DE MODÈLE DE LANGAGE CENTRAL POUR UN TERMINAL À COMMANDE VOCALE ET PROCÉDÉ DE FONCTIONNEMENT D'UN SERVEUR DE MODÈLE DE LANGAGE CENTRAL

(43) Veröffentlichungstag der Anmeldung: 30.04.2025
(73) Patentinhaber: Deutsche Telekom AG, 53113 Bonn (DE)
(72) Erfinder: MINOW, Jascha, 64625 Bensheim (DE); JAHN, Carl, 65191 Wiesbaden (DE); EL MALLOUKI, Said, 56329 St.Goar (DE)
(74) Vertreter: RDL Patentanwälte PartG mbB

(56) Entgegenhaltungen:
- CN-A- 113 205 802
- US-A1- 2021 118 425
- ALI SHAHIN SHAMSABADI ET AL: "Differentially Private Speaker Anonymization", ARXIV.ORG, CORNELL UNIVERSITY LIBRARY, 201 OLIN LIBRARY CORNELL UNIVERSITY ITHACA, NY 14853, 23 February 2022 (2022-02-23), XP091164038

## Beschreibung

Die Erfindung betrifft ein Verfahren für einen zentralen Sprachmodellserver und ein sprachgesteuertes Endgerät, bei dem ein sprachgesteuertes Endgerät einen Sprachbefehl eines Nutzers des sprachgesteuerten Endgeräts erfasst und eine den erfassten Sprachbefehl umfassende primäre Audiodatei zu einem dem sprachgesteuerten Endgerät zugeordneten zentralen Sprachmodellserver überträgt, eine Sprachsteuerung des sprachgesteuerten Endgeräts in der bereitgestellten primären Audiodatei mittels eines von dem zentralen Sprachmodellserver empfangenen Sprachmodells den Sprachbefehl erkennt und ein zu dem erkannten Sprachbefehl korrespondierendes Reagieren des Endgeräts veranlasst. Ferner betrifft die Erfindung einen zentralen Sprachmodellserver für ein sprachgesteuertes Endgerät und ein Computerprogrammprodukt.

Unter dem Sprachbefehl ist eine auditiv wahrnehmbare lautliche Äußerung des Nutzers zu verstehen, die das sprachgesteuerte Endgerät zu einer Reaktion veranlassen soll. Das von dem Sprachmodellserver bereitgestellte und von dem sprachgesteuerten Endgerät empfangene Sprachmodell ermöglicht dem sprachgesteuerten Endgerät ein Erkennen des Sprachbefehls in einer Audiodatei möglichst unabhängig von einer Sprechweise des Nutzers. Dazu muss das Sprachmodell bezogen auf mögliche Sprechweisen von Nutzern sprachgesteuerter Endgeräte eine weitgehende Universalität aufweisen.

Die Universalität wird durch Trainieren des Sprachmodells mittels einer Mehrzahl von Audiodateien, die Sprachbefehle von Nutzern umfassen, erreicht, siehe zum Beispiel die US 2021/0118425 A1.

Selbstverständlich hängt das erreichte Maß an Universalität von einer Anzahl und einer Vielfalt der zum Trainieren verwendeten Audiodateien ab.

Je mehr Nutzer sprachgesteuerte Endgeräte nutzen und je länger eine Nutzung der sprachgesteuerten Endgeräte dauert, desto mehr Audiodateien werden zu dem zentralen Sprachmodellserver übertragen und können zum Trainieren verwendet werden. Auf diese Weise kann das erreichte Maß an Universalität allmählich zunehmen.

Allerdings verbieten gesetzliche Vorschriften ein zeitlich unbegrenztes Speichern der übertragenen Audiodateien. Vielmehr müssen die Audiodateien nach einer maximal zulässigen Speicherdauer gelöscht werden und stehen demzufolge nach dem Löschen nicht mehr für das Trainieren des Sprachmodells zur Verfügung. Entsprechend verlernt das Sprachmodell nach der maximal zulässigen Speicherdauer die zu den gelöschten Audiodateien korrespondierenden Sprechweisen von Nutzern, was unerwünscht ist.

Es ist daher eine Aufgabe der Erfindung, ein Verfahren einen zentralen Sprachmodellserver und ein sprachgesteuertes Endgerät vorzuschlagen, das einerseits eine Konformität mit gesetzlichen Vorschriften aufweist und andererseits sicherstellt, dass ein von dem zentralen Sprachmodellserver trainiertes Sprachmodell eine erlernte Sprechweise nicht verlernt. Weitere Aufgaben der Erfindung sind, einen zentralen Sprachmodellserver für ein sprachgesteuertes Endgerät und ein Computerprogrammprodukt bereitzustellen.

Ein Gegenstand der Erfindung ist ein Verfahren für einen zentralen Sprachmodellserver und ein sprachgesteuertes Endgerät, bei dem ein sprachgesteuertes Endgerät einen Sprachbefehl eines Nutzers des sprachgesteuerten Endgeräts erfasst und eine den erfassten Sprachbefehl umfassende primäre Audiodatei zu einem dem sprachgesteuerten Endgerät zugeordneten zentralen Sprachmodellserver überträgt, eine Sprachsteuerung des sprachgesteuerten Endgeräts in der bereitgestellten primären Audiodatei mittels eines von dem zentralen Sprachmodellserver empfangenen Sprachmodells den Sprachbefehl erkennt und ein zu dem erkannten Sprachbefehl korrespondierendes Reagieren des Endgeräts veranlasst. Der zentrale Sprachmodellserver kann weiteren sprachgesteuerten Endgeräten zugeordnet sein, die von dem genannten sprachgesteuerten Endgerät verschieden sind. Üblicherweise ist der zentrale Sprachmodellserver einer großen Mehrzahl von sprachgesteuerten Endgeräten zugeordnet.

Die Audiodatei ist in der Regel eine digitale Binärdatei und umfasst eine Mehrzahl von Abtastwerten eines von einem Mikrofon des sprachgesteuerten Endgeräts erfassten Schallsignals. Das erfasste Schallsignal wird von dem sprachgesteuerten Endgerät periodisch abgetastet, wobei eine Dauer einer Periode zu einer Abtastfrequenz korrespondiert, genauer gesagt ein Kehrwert der Abtastfrequenz ist.

Das Sprachmodell ist in der Regel eine digitale Binärdatei und wird von der Sprachsteuerung verwendet, um in der primären Audiodatei ein Bitmuster zu erkennen, welches mit einer hinreichenden Genauigkeit zu einem oder mehreren vorbestimmten einer Reaktion des sprachgesteuerten Endgeräts zugeordneten Befehlswörtern korrespondiert, die in dem erfassten Sprachbefehl des Nutzers enthalten sind. Das Erkennen der Bitmuster wird hier als Erkennen des Sprachbefehls bezeichnet. Die Sprachsteuerung ist hier als ein Modul des sprachgesteuerten Endgeräts beschrieben.

Alternativ oder zusätzlich und ebenfalls im Rahmen der Erfindung kann der Sprachmodellserver die Sprachsteuerung umfassen und ausgebildet sein, das Sprachmodell auf die übertragene primäre Audiodatei anzuwenden, den Sprachbefehl zu erkennen und den erkannten Sprachbefehl zu dem sprachgesteuerten Endgerät zu übertragen.

Erfindungsgemäß speichert der zentrale Sprachmodellserver die übertragene primäre Audiodatei in einem Vorhaltespeicher des zentralen Sprachmodellservers und erzeugt ein Synthesemodul des zentralen Sprachmodellservers aus zufällig bestimmten Gruppen von in dem Vorhaltespeicher gespeicherten und von sprachgesteuerten Endgeräten übertragenen primären Audiodateien jeweilige sekundäre Audiodateien synthetisch, trainiert ein Trainingsmodul des Sprachmodellservers das Sprachmodell ausschließlich mit den erzeugten sekundären Audiodateien und überträgt der zentrale Sprachmodellserver das trainierte Sprachmodell zu dem sprachgesteuerten Endgerät. Das Sprachmodell wird nicht mit den übertragenen primären Audiodateien trainiert. Die erzeugten sekundären Audiodateien entkoppeln das Trainieren von den übertragenen primären Audiodateien.

Keine synthetisch erzeugte sekundäre Audiodatei ist einem einzelnen Nutzer eines sprachgesteuerten Endgeräts zuzuordnen. Die synthetisch erzeugten sekundären Audiodateien sind anonym und unterliegen keinem Verbot durch gesetzliche Vorschriften. Das zufällige Bestimmen der Gruppen erhöht einen Grad der Anonymität der synthetisch erzeugten sekundären Audiodateien weiter. Auf diese Weise ist die Konformität des Verfahrens mit den gesetzlichen Vorschriften gewährleistet.

Der zentrale Sprachmodellserver bestimmt bevorzugt zumindest drei gespeicherte primäre Audiodateien als eine Gruppe. Die angegebene Mindestgröße einer Gruppe erhöht den Grad der Anonymität weiter.

Ein Kategorisierungsmodul des zentralen Sprachmodellservers kann jeder gespeicherten primären Audiodatei eine Mehrzahl von jeweiligen vorbestimmten Kategorien zugeordneten Werten zuordnen und die Gruppe abhängig von den zugeordneten Werten bestimmen. Jeder zugeordnete Wert gibt eine Ausprägung der primären Audiodatei innerhalb der jeweiligen Kategorie an. Die jeweils zugeordneten Werte ermöglichen ein Vergleichen von primären Audiodateien, insbesondere ein Bestimmen einer auf die jeweils korrespondierenden Sprechweisen bezogenen Ähnlichkeit oder Unähnlichkeit der primären Audiodateien. Die zugeordneten Werte können als von dem Kategorisierungsmodul ermittelte Metadaten der primären Audiodateien verstanden werden.

Die vorbestimmten Kategorien umfassen vorteilhaft ein Geschlecht des Nutzers, einen Dialekt des Nutzers, ein Alter des Nutzers, eine Stimmlage des Nutzers, eine Sprechgeschwindigkeit des Nutzers, einen Sprechrhythmus des Nutzers, eine Sprechdynamik des Nutzers und/oder eine Sprechmelodie des Nutzers. Die angegebene Liste ist lediglich beispielhaft und nicht abschließend. Jede vorbestimmte Kategorie entspricht einem Merkmal der Sprechweise und trägt zu einem Bewerten der korrespondierenden Sprechweise bei. Zu der Stimmlage gehören eine Grundfrequenz und ein Obertonspektrum (Timbre) des Sprachbefehls. Die Sprechdynamik umfasst einen Lautstärkebereich des Sprachbefehls. Zu der Sprechmelodie gehört eine zeitlich Variabilität der Stimmlage, beispielsweise eine Stimmlage am Beginn des Sprachbefehls oder eine Stimmlage am Ende des Sprachbefehls.

In einer Ausführungsform werden die primären Audiodateien einer Gruppe derart bestimmt, dass ein abhängig von den zugeordneten Werten ermittelter Übereinstimmungswert größer oder gleich einem vorbestimmten Übereinstimmungsschwellwert ist und/oder paarweise Differenzen von derselben Kategorie zugeordneten Werten kleiner als ein vorbestimmter Abweichungsschwellwert ist. Der Übereinstimmungsschwellwert bestimmt eine minimale Ähnlichkeit der primären Audiodateien einer Gruppe. Beispielsweise kann der Übereinstimmungschwellwert 80% oder mehr als 80% betragen, so dass jede bestimmte Gruppe primäre Audiodateien umfasst, welche einander mindestens zu 80% ähnlich sind.

Der Abweichungsschwellwert bestimmt eine maximale Verschiedenheit der primären Audiodateien einer Gruppe bezogen auf eine einzelne Kategorie. Beispielsweise kann der Abweichungsschwellwert in der Kategorie "Geschlecht des Nutzers" 5% oder weniger als 5% betragen, so dass Geschlechtsunterschiede innerhalb der Gruppe sehr unwahrscheinlich und damit praktisch ausgeschlossen sind. In diesem Fall ist gewährleistet, dass jede bestimmte Gruppe ausschließlich männliche oder ausschließlich weibliche Sprechweisen abbildet.

Bevorzugt wird der ermittelte Übereinstimmungswert vergrößert, indem eine primäre Audiodatei der Gruppe mit größten paarweisen Differenzen von derselben Kategorie zugeordneten Werten von weiteren primären Audiodateien der Gruppe durch eine zufällig bestimmte von jeder primären Audiodatei der Gruppe verschiedene primäre Audiodatei ersetzt wird. Mit anderen Worten werden mittels einer Iteration die jeweils größten Differenzen schrittweise reduziert, bis der ermittelte Übereinstimmungswert den vorbestimmten Übereinstimmungsschwellwert erreicht oder überschreitet.

Der zentrale Sprachmodellserver kann die von dem Endgerät übertragene primäre Audiodatei in dem Vorhaltespeicher temporär und/oder abhängig von einer Zustimmung des Nutzers speichern und/oder jede sekundäre Audiodatei dauerhaft in einem Trainingsspeicher des zentralen Sprachmodellservers speichern. Jede primäre Audiodatei kann aus dem Vorhaltespeicher gelöscht, werden, d.h. nur temporär in dem Vorhaltespeicher gespeichert sein, wenn sie als Mitglied einer bestimmten Gruppe zumindest einmal zum synthetischen Erzeugen einer sekundären Audiodatei verwendet worden ist. Die mindestens eine synthetisch erzeugte sekundäre Audiodatei konserviert die zu der primären Audiodatei korrespondierende Sprechweise. Das Löschen einer primären Audiodatei vor ihrer Verwendung ist insbesondere dann nachteilig für das Erkennen von Sprachbefehlen in Audiodateien, wenn die zu der gelöschten primären Audiodatei korrespondierende Sprechweise stark von einer durchschnittlichen, d.h. normalen, Sprechweise abweicht, d.h. exotisch ist.

Selbstverständlich können gesetzliche Vorschriften verlangen, dass der Nutzer unabhängig von einer Speicherdauer jedem Speichern einer zu seinem Sprachbefehl korrespondierenden primären Audiodatei zustimmt. In diesem Fall kann das Sprachmodell nicht mit der Sprechweise des Nutzers trainiert werden. Wenn dagegen die gesetzlichen Vorschriften eine maximale zustimmungsfreie Speicherdauer definieren, können während der definierten maximalen zustimmungsfreien Speicherdauer primäre Audiodateien jedes Nutzers zum synthetischen Erzeugen von sekundären Audiodateien verwendet werden.

Durch das dauerhafte Speichern der synthetisch erzeugen sekundären Audiodateien, die auch als synthetisierte Trainingsdateien oder kurz Trainingsdateien bezeichnet werden können, wird die zu der primären Audiodatei korrespondierende Sprechweise konserviert und kann dauerhaft zum Trainieren des Sprachmodells verwendet werden. Auf diese Weise verlernt das Sprachmodell keine erlernten Sprechweisen, was mit einer kontinuierlich verbesserten Erkennung von Sprachbefehlen in Audiodateien einhergeht.

In vielen Ausführungsformen erfasst ein Sprachassistent oder ein mobiles Endgerät als das sprachgesteuerte Endgerät den Sprachbefehl. Der Sprachassistent kann auch als sprachgesteuerte Assistenzvorrichtung bezeichnet werden. Das sprachgesteuerte Endgerät kann als ein Smartphone, ein Tablet, ein Notebook oder dergleichen ausgebildet sein.

Noch ein Gegenstand der Erfindung ist ein zentraler Sprachmodellserver für ein sprachgesteuertes Endgerät. Der zentrale Sprachmodellserver erzeugt und aktualisiert fortlaufend, d.h. trainiert wiederholt ein Sprachmodell und stellt das erzeugte bzw. aktualisierte Sprachmodell zur Verwendung durch sprachgesteuerte Endgeräte bereit.

Erfindungsgemäß ist der zentrale Sprachmodellserver konfiguriert, ein Verfahren nach einer Ausführungsform der Erfindung auszuführen. Auf diese Weise ist der zentrale Sprachmodellserver konform mit gesetzlichen Vorschriften und stellt gleichzeitig sicher, dass ein von dem zentralen Sprachmodellserver trainiertes Sprachmodell eine erlernte Sprechweise nicht verlernt.

Ein weiterer Gegenstand der Erfindung ist ein Computerprogrammprodukt, umfassend ein digitales Speichermedium mit einem Programmcode. Das digitale Speichermedium ist beispielhaft und nicht einschränkend als eine CD (Compact Disk), eine DVD (Digital Versatile Disk), ein USB (Universal Serial Bus)-Stick, eine Festplatte (Harddisk, HD), ein Speicherchip (Random Access Memory, RAM), eine Internet-Cloud oder dergleichen ausgebildet.

Erfindungsgemäß veranlasst der Programmcode eine Rechenvorrichtung, ein Verfahren nach einer Ausführungsform der Erfindung als der zentrale Sprachmodellserver auszuführen, wenn er von einem Prozessor der Rechenvorrichtung ausgeführt wird. Das Computerprogrammprodukt ermöglicht im Zusammenwirken mit einer Rechenvorrichtung, gewöhnlich als Computer bezeichnet, ein Implementieren eines vorschriftenkonformen Sprachmodellservers, der ein Sprachmodell erzeugt bzw. fortlaufend aktualisert, das eine erlernte Sprechweise nicht verlernt, was mit einer kontinuierlich verbesserten Erkennung von Sprachbefehlen in Audiodateien einhergeht.

Ein wesentlicher Vorteil des erfindungsgemäßen Verfahrens besteht darin, dass sich eine Fähigkeit sprachgesteuerter Endgeräte kontinuierlich verbessert, Sprachbefehle von Nutzern zu erkennen, wodurch eine Aktzeptanz der sprachgesteuerten Endgeräte durch die Nutzer vergrößert wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

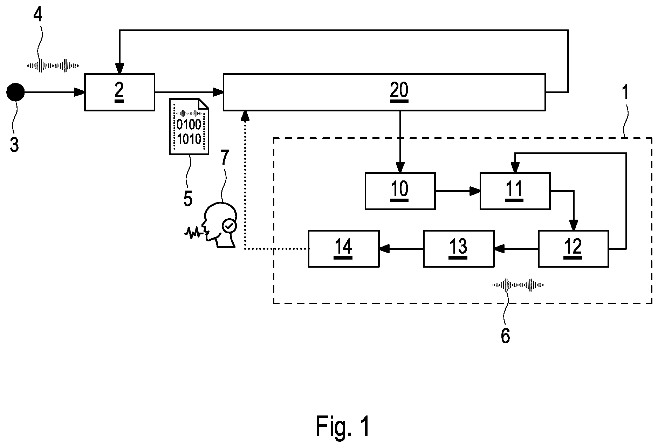

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Blockdiagramm einen zentralen Sprachmodellserver nach einer Ausführungsform der Erfindung für ein sprachgesteuertes Endgerät.

Fig. 1 zeigt in einem Blockdiagramm einen zentralen Sprachmodellserver 1 nach einer Ausführungsform der Erfindung für ein sprachgesteuertes Endgerät 2. Der zentrale Sprachmodellserver 1 umfasst einen Vorhaltespeicher 10, ein Synthesemodul 12 und einen Trainingsspeicher 14. Ferner kann der zentrale Sprachmodellserver 1 ein Kategorisierungsmodul 11 und einen Trainingsspeicher 13 umfassen.

Das sprachgesteuerte Endgerät 2 kann eine Sprachsteuerung 20 umfassen. Der zentrale Sprachmodellserver 1 ist konfiguriert, ein unten beschriebenes Verfahren nach einer Ausführungsform der Erfindung wie folgt auszuführen.

Insbesondere kann der zentrale Sprachmodellserver 1 mittels eines Computerprogrammprodukts implementiert sein, das ein digitales Speichermedium mit einem Programmcode umfasst. Der Programmcode veranlasst eine Rechenvorrichtung, das erfindungsgemäße Verfahren als der zentrale Sprachmodellserver 1 auszuführen, wenn er von einem Prozessor der Rechenvorrichtung ausgeführt wird.

Der Sprachmodellserver 1 für das sprachgesteuerte Endgerät 2 wird wie folgt betrieben.

Das sprachgesteuerte Endgerät 2, beispielsweise ein Sprachassistent oder ein mobiles Endgerät, erfasst einen Sprachbefehl 4 eines Nutzers 3 des sprachgesteuerten Endgeräts 2 und überträgt eine den erfassten Sprachbefehl 4 umfassende primäre Audiodatei 5 zu einem zentralen Sprachmodellserver 1, der dem sprachgesteuerten Endgerät 2 zugeordnet ist.

Die Sprachsteuerung 20 des sprachgesteuerten Endgeräts 2 erkennt in der bereitgestellten primären Audiodatei 5 mittels eines von dem zentralen Sprachmodellserver 1 empfangenen Sprachmodells 7 den Sprachbefehl 4 und veranlasst ein zu dem erkannten Sprachbefehl 4 korrespondierendes Reagieren des Endgeräts 2.

Der zentrale Sprachmodellserver 1 speichert die übertragene primäre Audiodatei 5 in dem Vorhaltespeicher 10 des zentralen Sprachmodellservers 1. Insbesondere kann der zentrale Sprachmodellserver 1 die von dem Endgerät 2 übertragene primäre Audiodatei 5 in dem Vorhaltespeicher 10 temporär und/oder abhängig von einer Zustimmung des Nutzers 3 speichern. Das Kategorisierungsmodul 11 des zentralen Sprachmodellservers 1 kann jeder gespeicherten primären Audiodatei 5 eine Mehrzahl von Werten zuordnen, die jeweiligen vorbestimmten Kategorien zugeordnet sind.

Die vorbestimmten Kategorien können ein Geschlecht des Nutzers 3, einen Dialekt des Nutzers 3, ein Alter des Nutzers 3, ein Stimmlage des Nutzers 3, eine Sprechgeschwindigkeit des Nutzers 3, einen Sprechrhythmus des Nutzers 3, eine Sprechdynamik des Nutzers 3 und/oder eine Sprechmelodie des Nutzers 3 umfassen.

Der zentrale Sprachmodellserver 1 bestimmt zufällig und insbesondere abhängig von den zugeordneten Werten Gruppen von primären Audiodateien 5, die in dem Vorhaltespeicher 10 gespeichert und von sprachgesteuerten Endgeräten 2 übertragen werden.

Bevorzugt werden die primären Audiodateien 5 einer Gruppe derart bestimmt, dass ein abhängig von den zugeordneten Werten ermittelter Übereinstimmungswert größer oder gleich einem vorbestimmten Übereinstimmungsschwellwert ist. Alternativ oder zusätzlich können die primären Audiodateien 5 einer Gruppe derart bestimmt werden, dass paarweise Differenzen von derselben Kategorie zugeordneten Werten kleiner als ein vorbestimmter Abweichungsschwellwert sind.

Dabei kann der ermittelte Übereinstimmungswert vergrößert werden, indem eine primäre Audiodatei 5 der Gruppe mit größten paarweisen Differenzen zu weiteren primären Audiodateien 5 der Gruppe durch eine zufällig bestimmte von jeder primären Audiodatei 5 der Gruppe verschiedene primäre Audiodatei 5 ersetzt wird.

Das Synthesemodul 12 des zentralen Sprachmodellservers 1 erzeugt aus den zufällig bestimmten Gruppen von primären Audiodateien 5 jeweilige sekundäre Audiodateien 6 synthetisch. Bevorzugt bestimmt der zentrale Sprachmodellserver 1 zumindest drei gespeicherte primäre Audiodateien 5 als eine Gruppe.

Der Sprachmodellserver 1 speichert weiterhin bevorzugt jede erzeugte sekundäre Audiodatei 6 dauerhaft in dem Trainingsspeicher 13 des zentralen Sprachmodellservers 1.

Das Trainingsmodul 14 des zentralen Sprachmodellservers 1 trainiert das Sprachmodell 7 ausschließlich mit den erzeugten sekundären Audiodateien 6. Der zentrale Sprachmodellserver 1 überträgt das trainierte Sprachmodell 7 zu dem sprachgesteuerten Endgerät 2.

### Bezugszeichenliste

- 1: Sprachmodellserver
- 10: Vorhaltespeicher
- 11: Kategorisierungsmodul
- 12: Synthesemodul
- 13: Trainingsspeicher
- 14: Trainingsmodul
- 2: sprachgesteuertes Endgerät
- 20: Sprachsteuerung
- 3: Nutzer
- 4: Sprachbefehl
- 5: primäre Audiodatei
- 6: sekundäre Audiodatei
- 7: Sprachmodell

## Patentansprüche

1. Verfahren für einen zentralen Sprachmodellserver (1) und ein sprachgesteuertes Endgerät (2), bei dem
- das sprachgesteuerte Endgerät (2) einen Sprachbefehl (4) eines Nutzers (3) des sprachgesteuerten Endgeräts (2) erfasst und eine den erfassten Sprachbefehl (4) umfassende primäre Audiodatei (5) zu dem dem sprachgesteuerten Endgerät (2) zugeordneten zentralen Sprachmodellserver (1) überträgt;
- eine Sprachsteuerung (20) des sprachgesteuerten Endgeräts (2) in der bereitgestellten primären Audiodatei (5) mittels eines von dem zentralen Sprachmodellserver (1) empfangenen Sprachmodells (7) den Sprachbefehl (4) erkennt und ein zu dem erkannten Sprachbefehl (4) korrespondierendes Reagieren des Endgeräts (2) veranlasst;
- der zentrale Sprachmodellserver (1) die übertragene primäre Audiodatei (5) in einem Vorhaltespeicher (10) des zentralen Sprachmodellservers (1) speichert, ein Synthesemodul (12) des zentralen Sprachmodellservers (1) aus zufällig bestimmten Gruppen von in dem Vorhaltespeicher (10) gespeicherten und von sprachgesteuerten Endgeräten (2) übertragenen primären Audiodateien (5) jeweilige sekundäre Audiodateien (6) synthetisch erzeugt, ein Trainingsmodul (14) des zentralen Sprachmodellservers (1) das Sprachmodell (7) ausschließlich mit den erzeugten sekundären Audiodateien (6) trainiert und der zentrale Sprachmodellserver (1) das trainierte Sprachmodell (7) zu dem sprachgesteuerten Endgerät (2) überträgt.

2. Verfahren nach Anspruch 1, bei dem der zentrale Sprachmodellserver (1) zumindest drei gespeicherte primäre Audiodateien (5) als eine Gruppe bestimmt.

3. Verfahren nach Anspruch 1 oder 2, bei dem ein Kategorisierungsmodul (11) des zentralen Sprachmodellservers (1) jeder gespeicherten primären Audiodatei (5) eine Mehrzahl von jeweiligen vorbestimmten Kategorien zugeordneten Werten zuordnet und die Gruppe abhängig von den zugeordneten Werten bestimmt.

4. Verfahren nach Anspruch 3, bei dem die vorbestimmten Kategorien ein Geschlecht des Nutzers (3), einen Dialekt des Nutzers (3), ein Alter des Nutzers (3), eine Stimmlage des Nutzers (3), eine Sprechgeschwindigkeit des Nutzers (3), einen Sprechrhythmus des Nutzers (3), eine Sprechdynamik des Nutzers (3) und/oder eine Sprechmelodie des Nutzers (3) umfassen.

5. Verfahren nach einem der Ansprüch 1 bis 4, bei dem die primären Audiodateien (5) einer Gruppe derart bestimmt werden, dass ein abhängig von den zugeordneten Werten ermittelter Übereinstimmungswert größer oder gleich einem vorbestimmten Übereinstimmungsschwellwert ist und/oder paarweise Differenzen von derselben Kategorie zugeordneten Werten kleiner als ein vorbestimmter Abweichungsschwellwert sind.

6. Verfahren nach einem der Ansprüche 1 bis 5, bei dem der ermittelte Übereinstimmungswert vergrößert wird, indem eine primäre Audiodatei (5) der Gruppe mit größten paarweisen Differenzen zu weiteren primären Audiodateien (5) der Gruppe durch eine zufällig bestimmte von jeder primären Audiodatei (5) der Gruppe verschiedene primäre Audiodatei (5) ersetzt wird.

7. Verfahren nach einem der Ansprüche 1 bis 6, bei dem der zentrale Sprachmodellserver (1) die von dem Endgerät (2) übertragene primäre Audiodatei (5) in dem Vorhaltespeicher (10) temporär und/oder abhängig von einer Zustimmung des Nutzers (3) speichert und/oder jede sekundäre Audiodatei (6) dauerhaft in einem Trainingsspeicher (13) des zentralen Sprachmodellservers (1) speichert.

8. Verfahren nach einem der Ansprüche 1 bis 7, bei dem ein Sprachassistent oder ein mobiles Endgerät als das sprachgesteuerte Endgerät (2) den Sprachbefehl (4) erfasst.

9. Zentraler Sprachmodellserver (1) für ein sprachgesteuertes Endgerät (2), der konfiguriert ist, in einem Verfahren nach einem der Ansprüche 1 bis 8 betrieben zu werden.

10. Computerprogrammprodukt, umfassend ein digitales Speichermedium mit einem Programmcode, der eine Rechenvorrichtung veranlasst, ein Verfahren nach einem der Ansprüche 1 bis 8 als der zentrale Sprachmodellserver (1) auszuführen, wenn er von einem Prozessor der Rechenvorrichtung ausgeführt wird.

## Claims

1. A method for a central language model server (1) and a voice-enabled terminal (2), in which
- the voice-enabled terminal (2) captures a voice command (4) from a user (3) of the voice-enabled terminal (2) and transmits a primary audio file (5) comprising the captured voice command (4) to the central language model server (1) assigned to the voice-enabled terminal (2);
- a voice controller (20) of the voice-enabled terminal (2) recognizes the voice command (4) in the provided primary audio file (5) by means of a language model (7) received from the central language model server (1) and initiates a response of the terminal (2) corresponding to the recognized voice command (4);
- the central language model server (1) stores the transmitted primary audio file (5) in a buffer memory (10) of the central language model server (1), a synthesis module (12) of the central language model server (1) generates respective secondary audio files (6) synthetically from randomly determined groups of primary audio files (5) stored in the buffer memory (10) and transmitted by voice-enabled terminals (2), a training module (14) of the central language model server (1) trains the language model (7) exclusively with the generated secondary audio files (6) and the central language model server (1) transmits the trained language model (7) to the voice-enabled terminal (2).

2. The method according to claim 1, in which the central language model server (1) determines at least three stored primary audio files (5) as a group.

3. The method according to claim 1 or 2, in which a categorization module (11) of the central language model server (1) assigns to each stored primary audio file (5) a plurality of values assigned to respective predetermined categories and determines the group depending on the assigned values.

4. The method according to claim 3, in which the predetermined categories comprise a gender of the user (3), a dialect of the user (3), an age of the user (3), a voice pitch of the user (3), a speaking rate of the user (3), a speaking rhythm of the user (3), a speaking dynamics of the user (3) and/or a speaking melody of the user (3).

5. The method according to any of claims 1 to 4, in which the primary audio files (5) of a group are determined such that a match value determined depending on the assigned values is greater than or equal to a predetermined match threshold value and/or pairwise differences of values assigned to the same category are smaller than a predetermined deviation threshold value.

6. The method according to any of claims 1 to 5, in which the determined match value is increased by replacing a primary audio file (5) of the group with largest pairwise differences to further primary audio files (5) of the group with a randomly determined primary audio file (5) that is different from each primary audio file (5) of the group.

7. The method according to any of claims 1 to 6, in which the central language model server (1) stores the primary audio file (5) transmitted by the terminal (2) in the buffer memory (10) temporarily and/or depending on a consent of the user (3) and/or stores each secondary audio file (6) permanently in a training memory (13) of the central language model server (1).

8. The method according to any of claims 1 to 7, in which a voice assistant or a mobile terminal as the voice-enabled terminal (2) captures the speech command (4).

9. A central language model server (1) for a voice-enabled terminal (2), which is configured to be operated in a method according to any of claims 1 to 8.

10. A computer program product comprising a digital memory medium having a program code which, when executed by a processor of the computing device, causes a computing device as the central language model server (1) to execute a method according to any of claims 1 to 8

## Revendications

1. Procédé pour un serveur de modèle de langage central (1) et un terminal à commande vocale (2), dans lequel
- le terminal à commande vocale (2) enregistre une commande vocale (4) d'un utilisateur (3) du terminal à commande vocale (2) et transmet un fichier audio primaire (5) comprenant la commande vocale (4) enregistrée au serveur de modèle de langage central (1) associé au terminal à commande vocale (2) ;
- une commande vocale (20) du terminal à commande vocale (2) reconnaît la commande vocale (4) dans le fichier audio primaire (5) fourni à l'aide d'un modèle de langage (7) reçu du serveur de modèle de langage central (1) et déclenche une réaction du terminal (2) correspondant à la commande vocale (4) reconnue ;
- le serveur de modèle de langage central (1) stocke le fichier audio primaire (5) transmis dans une mémoire tampon (10) du serveur de modèle de langage central (1), un module de synthèse (12) du serveur de modèle de langage central (1) génère de manière synthétique des fichiers audio secondaires (6) à partir de groupes déterminés de manière aléatoire de fichiers audio primaires (5) stockés dans la mémoire tampon (10) et transmis par des terminaux à commande vocale (2), un module d'entraînement (14) du serveur de modèle de langage central (1) entraîne le modèle de langage (7) exclusivement à l'aide des fichiers audio secondaires (6) générés et le serveur de modèle de langage central (1) transmet le modèle de langage (7) entraîné au terminal à commande vocale (2).

2. Procédé selon la revendication 1, dans lequel le serveur de modèle de langage central (1) détermine au moins trois fichiers audio primaires (5) enregistrés comme un groupe.

3. Procédé selon la revendication 1 ou 2, dans lequel un module de catégorisation (11) du serveur de modèle de langage central (1) attribue à chaque fichier audio primaire (5) stocké une pluralité de valeurs associées à des catégories prédéterminées respectives et détermine le groupe en fonction des valeurs attribuées.

4. Procédé selon la revendication 3, dans lequel les catégories prédéterminées comprennent le sexe de l'utilisateur (3), le dialecte de l'utilisateur (3), l'âge de l'utilisateur (3), le timbre de voix de l'utilisateur (3), la vitesse d'élocution de l'utilisateur (3), le débit de parole de l'utilisateur (3), la dynamique de parole de l'utilisateur (3) et/ou la mélodie de parole de l'utilisateur (3).

5. Procédé selon l'une des revendications 1 à 4, dans lequel les fichiers audio primaires (5) d'un groupe sont déterminés de telle sorte qu'une valeur de concordance déterminée en fonction des valeurs attribuées est supérieure ou égale à une valeur seuil de concordance prédéfinie et/ou que les différences par paires par rapport aux valeurs attribuées à la même catégorie sont inférieures à une valeur seuil d'écart prédéfinie.

6. Procédé selon l'une des revendications 1 à 5, dans lequel la valeur de concordance déterminée est augmentée du fait qu'un fichier audio primaire (5) du groupe présentant les plus grandes différences par paires par rapport à d'autres fichiers audio primaires (5) du groupe est remplacé par un fichier audio primaire (5) déterminé de manière aléatoire et différent de chaque fichier audio primaire (5) du groupe.

7. Procédé selon l'une des revendications 1 à 6, dans lequel le serveur de modèle de langage central (1) stocke le fichier audio primaire (5) transmis par le terminal (2) dans la mémoire tampon (10) de manière temporaire et/ou en fonction d'un consentement de l'utilisateur (3) et/ou stocke chaque fichier audio secondaire (6) de manière permanente dans une mémoire d'apprentissage (13) du serveur de modèle de langage central (1).

8. Procédé selon l'une des revendications 1 à 7, dans lequel un assistant vocal ou un terminal mobile faisant office de terminal à commande vocale (2) enregistre la commande vocale (4).

9. Serveur de modèle de langage central (1) pour un terminal à commande vocale (2), configuré pour fonctionner selon un procédé selon l'une des revendications 1 à 8.

10. Produit logiciel comprenant un support de stockage numérique contenant un code de programme qui amène un dispositif informatique à exécuter un procédé selon l'une des revendications 1 à 8 en tant que serveur de modèle de langage central (1) lorsqu'il est exécuté par un processeur du dispositif informatique.
